(19) **Europäisches Patentamt**
**European Patent Office**
**Office européen des brevets**

(11) **EP 4 186 327 B1**

(12) # EUROPEAN PATENT SPECIFICATION

(45) Date of publication and mention
of the grant of the patent:
**10.06.2026 Bulletin 2026/24**

(21) Application number: **21746178.9**

(22) Date of filing: **21.07.2021**

(51) International Patent Classification (IPC):
*H04W 76/28* (2018.01)

(52) Cooperative Patent Classification (CPC):
**H04W 76/28; Y02D 30/70**

(86) International application number:
**PCT/IB2021/056586**

(87) International publication number:
**WO 2022/018654 (27.01.2022 Gazette 2022/04)**

(54) **METHODS AND APPARATUSES FOR DRX FOR XR SERVICES**

VERFAHREN UND GERÄTE FÜR DRX FÜR XR-DIENSTE

PROCÉDÉS ET DISPOSITIFS DE DRX POUR SERVICES XR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.07.2020 US 202063054286 P**

(43) Date of publication of application:
**31.05.2023 Bulletin 2023/22**

(73) Proprietor: **Telefonaktiebolaget LM Ericsson
(publ)
164 83 Stockholm (SE)**

(72) Inventors:
• **PRADAS, Jose Luis
118 27 Stockholm (SE)**
• **TIDESTAV, Claes
746 31 Bålsta (SE)**

(74) Representative: **Ericsson
Patent Development
Torshamnsgatan 21-23
164 80 Stockholm (SE)**

(56) References cited:
EP-A1- 3 500 028          WO-A1-2020/222619
US-A1- 2018 183 485       US-A1- 2020 389 933
US-A1- 2020 404 604       US-B2- 10 342 063

• INTEL CORPORATION: "C-DRX enhancements",
vol. RAN WG2, no. Xi'an, China; 20190408 -
20190412, 29 March 2019 (2019-03-29),
XP051693650, Retrieved from the Internet
<URL:http://www.3gpp.org/ftp/tsg%5Fran/WG2%
5FRL2/TSGR2%5F105bis/Docs/R2%
2D1904434%2Ezip> [retrieved on 20190329]
• QUALCOMM INCORPORATED: "Remaining
issues on C-DRX for short TTI", vol. RAN WG2,
no. Berlin, Germany; 20170821 - 20170825, 20
August 2017 (2017-08-20), XP051319361,
Retrieved from the Internet <URL:http://
www.3gpp.org/ftp/Meetings_3GPP_SYNC/RAN2/
Docs/> [retrieved on 20170820]
• LENOVO ET AL: "Remaining issue on support
non-integer periodicity for TSN traffic", vol. RAN
WG2, no. Reno, , Nevada, USA; 20191118 -
20191122, 8 November 2019 (2019-11-08),
XP051817042, Retrieved from the Internet
<URL:https://ftp.3gpp.org/tsg_ran/WG2_RL2/
TSGR2_108/Docs/> [retrieved on 20191108]

EP 4 186 327 B1

**Description**

TECHNICAL FIELD

Embodiments of the present disclosure are directed to wireless communications and, more particularly, to discontinuous reception (DRX) for extended reality (XR) services.

BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Discontinuous reception (DRX) assists a wireless device, such as a user equipment (UE), to save energy by not monitoring the downlink during certain periods of time. The DRX framework consists of two different DRX periods: short DRX, and long DRX. In principle, the short DRX cycle results in the UE monitoring the downlink more often than when the UE is in the long DRX cycle. If the short DRX cycle is configured, the UE enters the short DRX cycle after the DRX inactivity timer expires (i.e., when there is no downlink or uplink transmissions for a period of time). The UE enters the long DRX cycle after the inactivity timer expires if the short DRX cycle is not configured or, if the short DRX cycle was configured, when the short cycle timer expires.

DRX is controlled by the following parameters described in TS 38.321 v16.0.0.

- drx-onDurationTimer: the duration at the beginning of a DRX Cycle;
- drx-SlotOffset: the delay before starting the drx-onDurationTimer;
- drx-InactivityTimer: the duration after the physical downlink control channel

(PDCCH) occasion in which a PDCCH indicates a new uplink or downlink transmission for the media access control (MAC) entity;

- drx-RetransmissionTimerDL (per downlink hybrid automatic repeat request (HARQ) process except for the broadcast process): the maximum duration until a downlink retransmission is received;
- drx-RetransmissionTimerUL (per uplink HARQ process): the maximum duration until a grant for uplink retransmission is received;
- drx-LongCycleStartOffset: the Long DRX cycle and drx-StartOffset which defines the subframe where the Long and Short DRX Cycle starts;
- drx-ShortCycle (optional): the Short DRX cycle;
- drx-ShortCycleTimer (optional): the duration the UE shall follow the Short DRX cycle;
- drx-HARQ-RTT-TimerDL (per downlink HARQ process except for the broadcast process): the minimum duration before a downlink assignment for HARQ retransmission is expected by the MAC entity;
- drx-HARQ-RTT-TimerUL (per uplink HARQ process): the minimum duration before an uplink HARQ retransmission grant is expected by the MAC entity;
- ps-Wakeup (optional): the configuration to start associated drx-onDurationTimer in case DCP is monitored but not detected;
- ps-Periodic_CSI_Transmit (optional): the configuration to report periodic channel state information (CSI) during the time duration indicated by drx-onDurationTimer in case DCP is configured but associated drx-onDurationTimer is not started;
- ps-TransmitPeriodicL1-RSRP (optional): the configuration to transmit periodic L1-reference signal receive power (RSRP) report(s) during the time duration indicated by drx-onDurationTimer in case DCP is configured but associated drx-onDurationTimer is not started.

The DRX configuration may take the following values, as described in 38.331 v16.0.0.

```
DRX-Config ::=                          SEQUENCE {
    drx-onDurationTimer                     CHOICE {
                                                subMilliSeconds INTEGER (1..31),
                                                milliSeconds    ENUMERATED {
                                                    ms1, ms2, ms3, ms4, ms5, ms6, ms8, ms10, ms20,

ms30, ms40, ms50, ms60,
                                                        ms80, ms100, ms200, ms300, ms400, ms500,

ms600, ms800, ms1000, ms1200,


                                                        ms1600, spare8, spare7, spare6, spare5,

spare4, spare3, spare2, spare1 }
                                                },
    drx-InactivityTimer                     ENUMERATED {
                                                ms0, ms1, ms2, ms3, ms4, ms5, ms6, ms8, ms10,

ms20, ms30, ms40, ms50, ms60, ms80,
                                                    ms100, ms200, ms300, ms500, ms750, ms1280, ms1920,

ms2560, spare9, spare8,
                                                    spare7, spare6, spare5, spare4, spare3, spare2,

spare1},
    drx-HARQ-RTT-TimerDL                    INTEGER (0..56),
    drx-HARQ-RTT-TimerUL                    INTEGER (0..56),
    drx-RetransmissionTimerDL               ENUMERATED {
                                                sl0, sl1, sl2, sl4, sl6, sl8, sl16, sl24, sl33,

sl40, sl64, sl80, sl96, sl112, sl128,
                                                    sl160, sl320, spare15, spare14, spare13, spare12,

spare11, spare10, spare9,
                                                    spare8, spare7, spare6, spare5, spare4, spare3,

spare2, spare1},
    drx-RetransmissionTimerUL               ENUMERATED {
                                                sl0, sl1, sl2, sl4, sl6, sl8, sl16, sl24, sl33,

sl40, sl64, sl80, sl96, sl112, sl128,
                                                    sl160, sl320, spare15, spare14, spare13, spare12,

spare11, spare10, spare9,
                                                    spare8, spare7, spare6, spare5, spare4, spare3,

spare2, spare1 },
    drx-LongCycleStartOffset                CHOICE {
        ms10                                    INTEGER(0..9),
        ms20                                    INTEGER(0..19),
        ms32                                    INTEGER(0..31),
        ms40                                    INTEGER(0..39),
        ms60                                    INTEGER(0..59),
        ms64                                    INTEGER(0..63),
        ms70                                    INTEGER(0..69),
        ms80                                    INTEGER(0..79),
        ms128                                   INTEGER(0..127),
        ms160                                   INTEGER(0..159),
        ms256                                   INTEGER(0..255),
        ms320                                   INTEGER(0..319),
        ms512                                   INTEGER(0..511),
        ms640                                   INTEGER(0..639),
        ms1024                                  INTEGER(0..1023),
        ms1280                                  INTEGER(0..1279),
        ms2048                                  INTEGER(0..2047),
        ms2560                                  INTEGER(0..2559),
        ms5120                                  INTEGER(0..5119),
        ms10240                                 INTEGER(0..10239)
    },

    shortDRX                                SEQUENCE {
        drx-ShortCycle                          ENUMERATED {
                                                    ms2, ms3, ms4, ms5, ms6, ms7, ms8, ms10, ms14,

ms16, ms20, ms30, ms32,
                                                        ms35, ms40, ms64, ms80, ms128, ms160, ms256,

ms320, ms512, ms640, spare9,
                                                        spare8, spare7, spare6, spare5, spare4,

spare3, spare2, spare1 },
        drx-ShortCycleTimer                     INTEGER (1..16)
    }
OPTIONAL,   -- Need R
    drx-SlotOffset                          INTEGER (0..31)
```

When a UE uses the short DRX cycle, the UE monitors the downlink using the equation: [(SFN × 10) + subframe number] modulo (drx-ShortCycle) = (drx-StartOffset) modulo (drx-ShortCycle).

And when the UE uses the long DRX cycle, the UE monitors the downlink using the equation: [(SFN × 10) + subframe number] modulo (drx-LongCycle) = drx-StartOffset.

Some extended reality (XR) services such as virtual reality (VR) and augmented reality (AR) may be characterized by periodic traffic such as video with a frame periodicity of 1/30, 1/60, or 1/120 second.

There currently exist certain challenges. For example, current parameters and equations to calculate the ON period are not suitable for services which do not have a periodicity multiple to the currently defined values. This eventually results in traffic that is generated during a period in which the UE is not in its "on duration," i.e., not monitoring the downlink.

One reason this happens is that DRX cycles are defined as natural numbers, e.g., 2, 10, 20, etc. ms. However, for services in which traffic is not generated at a periodicity multiple of the configured DRX cycle, a deviation is created every cycle between the time at which the UE monitors the downlink and the point at which traffic is ready for delivery to the UE. Typically this problem happens with services where traffic is generated with a periodicity that includes decimals such as, for instance, 1/30 ms (33,33333 ms).

The following example illustrates the potential problem. A video service generates frames at a rate of 1/30. A frame is created every 33,33333 ms. A DRX configuration contains a short DRX cycle set to 32 ms and the on duration is set to 8 ms. The ON periods of the short DRX cycle and the times in which the data is generated according to the equation [(SFN × 10) + subframe number] modulo (drx-ShortCycle) = (drx-StartOffset) modulo (drx-ShortCycle) are illustrated in Table 1.

Table 1

| DRX ON Start | App Data | DRX ON End |
|---|---|---|
| 0 | 0.00 | 8 |
| 32 | 33,33 | 40 |
| 64 | 66,67 | 72 |
| 96 | 100,00 | 104 |
| 128 | 133,33 | 136 |
| 160 | 166,67 | 168 |
| 192 | 200,00 | 200 |
| 224 | **233,33** | 232 |
| 256 | **266,67** | 264 |
| 288 | **300,00** | 296 |
| 320 | **333,33** | 328 |
| 352 | **366,67** | 360 |
| 384 | **400,00** | 392 |

As illustrated in Table 1, eventually, the UE is not monitoring the downlink when application data is generated. For example, the UE will be monitoring the DL, for example, between the period (DRX ON START) 224 ms and (DRX ON End) 232 ms. Yet, the data will arrive at 233,33 ms which is outside the monitoring period. The result is that the downlink transmission needs to be delayed to the next DRX cycle. A consequence is that the latency is increased, and this may not be acceptable for services with very low latency requirements. The same type of event is observed when the long DRX cycle is used.

US 10 342 063 B2 describes methods and apparatus of changing the discontinuous reception (DRX) configuration for a connection between a mobile device and a base station that reduces the likelihood of a dropped connection. A mobile device receives updated configuration parameters for the connection from a base station. A mobile device receives updated configuration parameters for the connection from a base station. The mobile device postpones the adoption of the new configuration parameters and continues using previous configuration parameters for the connection after receipt of the new configuration parameters until a subsequent on duration of a DRX cycle has occurred according to the previous configuration. The mobile device applies the updated configuration parameters for the connection in the subsequent on duration. Thereafter, the mobile device turns its receiver on and off in DRX mode according to the new DRX configuration.

US 2018/168 485 A1 describes a wireless communication device receiving an indication of timing alignment of a discontinuous reception (DRX) duration, determines a timing alignment for a reception/transmission (RX/TX) switching pattern of the wireless communication device based on the timing alignment of the DRX duration, and performs half-duplex (HD) communication with a radio access node according to the RX/TX switching pattern having the determined timing alignment.

EP 3 500 025 A1 describes an electronic device used for a network control terminal and a method used for the electronic device, and an electronic device used for a network node and a method used for the electronic device. The electronic device used for the network control terminal comprises: a processing circuit, configured to configure, for a relay link between the network node and one or more other network nodes, a SL-DRX for the network node and/or the one or more other network nodes and perform relay transmission between the network node and the one or more other network nodes on the basis of the configuration of the SL-DRX.

SUMMARY

Based on the description above, certain challenges currently exist with discontinuous reception (DRX) and services like extended reality (XR) services. The above problem is solved by the subject matter of the independent claims. Examples and technical descriptions of apparatuses, products and/or methods in the description and/or drawings which are not covered by the claims are presented not as embodiments of the invention but as background art or examples useful for understanding the invention. Certain aspects of the present disclosure and their embodiments may provide solutions to these or other challenges. Particular embodiments configure a DRX cycle that is adjusted after a number of cycles so that the original DRX ON period is shifted by a time offset. Some embodiments include a time shift in the DRX cycle every nth DRX cycle. The DRX ON period shifts in time so that when data is generated and ready to transmit to the UE, it falls within the DRX ON period.

According to some embodiments, a method performed by a wireless device for DRX comprises receiving a first message comprising an indication that an offset is to be used with discontinuous reception; monitoring a downlink during a first period of time associated with a preconfigured discontinuous reception cycle; determining that a first number of time periods have occurred since monitoring the downlink in the first period of time; and monitoring the downlink during a second period of time, the second period of time adjusted from the preconfigured discontinuous reception cycle based on the offset.

In particular embodiments, the first message is a radio resource control (RRC) message and the indication is part of a DRX-Config information element. The indication may comprise an amount of time to be used for the offset and/or a frequency with which to apply the offset.

In particular embodiments, the wireless device obtains additional offset information. The additional offset information may be received from the first message, from a second message, or be predetermined. The additional offset information may comprise one of an amount of time to be used for the offset and an indication of a frequency with which to apply the offset.

According to some embodiments, a wireless device comprises processing circuitry operable to perform any of the wireless device methods described above.

Also disclosed is a computer program product comprising a non-transitory computer readable medium storing computer readable program code, the computer readable program code operable, when executed by processing circuitry to perform any of the methods performed by the wireless device described above.

According to some embodiments, a method performed by a network node for DRX comprises determining that data to be sent to a wireless device is able to be sent with a periodicity that differs from a preconfigured discontinuous reception cycle; transmitting a first message comprising an indication that the wireless device is to use an offset with discontinuous reception; transmitting data to the wireless device during a first downlink period of time; determining that a first number of time periods have occurred since the first downlink period of time; and transmitting data to the wireless device during a second downlink period of time, the second downlink period of time adjusted from the preconfigured discontinuous reception cycle based on the offset.

In particular embodiments, the first message is a RRC message and the indication is part of a DRX-Config information element. The indication may comprise an amount of time to be used for the offset and/or a frequency with which to apply the offset.

In particular embodiments, the network node provides additional offset information to the wireless device. The additional offset information may be contained in the first message, contained in a second message, or be predetermined. The additional offset information may comprise one of an amount of time to be used for the offset and an indication of a frequency with which to apply the offset.

According to some embodiments, a network node comprises processing circuitry operable to perform any of the network node methods described above.

Also disclosed is a computer program product comprising a non-transitory computer readable medium storing computer readable program code, the computer readable program code operable, when executed by processing circuitry to perform any of the methods performed by the network node described above.

Certain embodiments may provide one or more of the following technical advantages. For example, particular embodiments enhance the DRX configuration to fit services for which currently defined parameters are not suitable. Thus, particular embodiments facilitate configuring DRX when these services are used and, therefore, achieves battery saving. Particular embodiments align the DRX cycle to the points in time in which traffic is generated, therefore avoiding latencies experienced with the legacy DRX configuration.

BRIEF DESCRIPTION OF THE DRAWINGS

For a more complete understanding of the disclosed embodiments and their features and advantages, reference is now made to the following description, taken in conjunction with the accompanying drawings, in which:

FIGURE 1 is a block diagram illustrating an example wireless network;
FIGURE 2 illustrates an example user equipment, according to certain embodiments;
FIGURE 3 is flowchart illustrating an example method in a wireless device, according to certain embodiments;
FIGURE 4 is flowchart illustrating an example method in a network node, according to certain embodiments;
FIGURE 5 illustrates a schematic block diagram of a wireless device and a network node in a wireless network, according to certain embodiments;
FIGURE 6 illustrates an example virtualization environment, according to certain embodiments;
FIGURE 7 illustrates an example telecommunication network connected via an intermediate network to a host computer, according to certain embodiments;
FIGURE 8 illustrates an example host computer communicating via a base station with a user equipment over a partially wireless connection, according to certain embodiments;
FIGURE 9 is a flowchart illustrating a method implemented, according to certain embodiments;
FIGURE 10 is a flowchart illustrating a method implemented in a communication system, according to certain embodiments;
FIGURE 11 is a flowchart illustrating a method implemented in a communication system, according to certain embodiments;
FIGURE 12 is a flowchart illustrating a method implemented in a communication system, according to certain embodiments; and
FIGURE 13 is a flowchart illustrating a method in accordance with some embodiments.

DETAILED DESCRIPTION

Based on the description above, certain challenges currently exist with discontinuous reception (DRX) and services like extended reality (XR) services. Certain aspects of the present disclosure and their embodiments may provide solutions to these or other challenges. Particular embodiments configure a DRX cycle that is adjusted after a number of cycles so that the original DRX ON period is shifted by a time offset. Some embodiments include a time shift in the DRX cycle every nth DRX cycle. The DRX ON period shifts in time so that when data is generated and ready to transmit to the UE, it falls within the DRX ON period.

Particular embodiments are described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. The scope of the invention is defined by the appended claims.

Certain embodiments disclosed herein consist of adding a time offset (traffic_time_offset) after a certain number of DRX cycles. This can be represented by the following equation.

$$\left[ (SFN x 10) + (subframe\ nr) + (n\ x\ traffic\_time\_offset)\ modulo\ DRX_{cycle} \right]$$

$$= \left( drx_{start_{offset}} \right) + (n\ x\ traffic\_time\_offset) modulo\ DRX_{cycle}$$

$$DRX_{cycle\ number} = \frac{SFN x 10 + subframe\ nr}{DRX\_cycle}$$

$n = n + 1$ when $DRX_{cycle\ number}$ modulo traffic_drx_offset = 0.

The network provides the legacy DRX parameters and, in addition, may provide the "traffic_time_offset" and the "traffic_drx_offset," for example. The DRXcycle can be either the short DRX cycle or long DRX cycle. The DRX start offset may be the corresponding value for the short DRX cycle or the long DRX cycle (as per legacy behaviour).

When the DRX cycle number is a multiple number of the traffic _drx_offset, n is increased by 1. Then, the ON period of the UE is shifted by n times the traffic_time_offset. n is initially set to 0. In some embodiments, this may include ($n \times$ traffic_time_offset) in which $n = n + 1$ when $DRX_{cycle\ number}$ modulo $traffic_{drx_{offset}}$ = 0.

$$DRX_{cycle\ number} = \frac{SFN x 10 + subframe\ nr}{DRX\_cycle}$$

Considering the above example, with a traffic_time_offset = 4 ms and a traffic_drx_offset = 3, the new monitoring times are as shown in the right side of Table 2. The monitoring times using the legacy behaviour are shown in the left side of Table 2.

Table 2

| Legacy equation | | | | | New equation | | |
|---|---|---|---|---|---|---|---|
| DRX ON start time | App Data | DRX On end time | | | New DRX On start time | App Data | New DRX On end time |
| 0 | 0,00 | 8 | | | 0 | 0,00 | 8 |
| 32 | 33,33 | 40 | | | 32 | 33,33 | 40 |
| 64 | 66,67 | 72 | | | 64 | 66,67 | 72 |
| 96 | 100,00 | 104 | | | 100 | 100,00 | 108 |
| 128 | 133,33 | 136 | | | 132 | 133,33 | 140 |
| 160 | 166,67 | 168 | | | 164 | 166,67 | 172 |
| 192 | 200,00 | 200 | | | 200 | 200,00 | 208 |
| 224 | 233,33 | 232 | | | 232 | 233,33 | 240 |
| 256 | 266,67 | 264 | | | 264 | 266,67 | 272 |
| 288 | 300,00 | 296 | | | 300 | 300,00 | 308 |
| 320 | 333,33 | 328 | | | 332 | 333,33 | 340 |
| 352 | 366,67 | 360 | | | 364 | 366,67 | 372 |
| 384 | 400,00 | 392 | | | 400 | 400,00 | 408 |

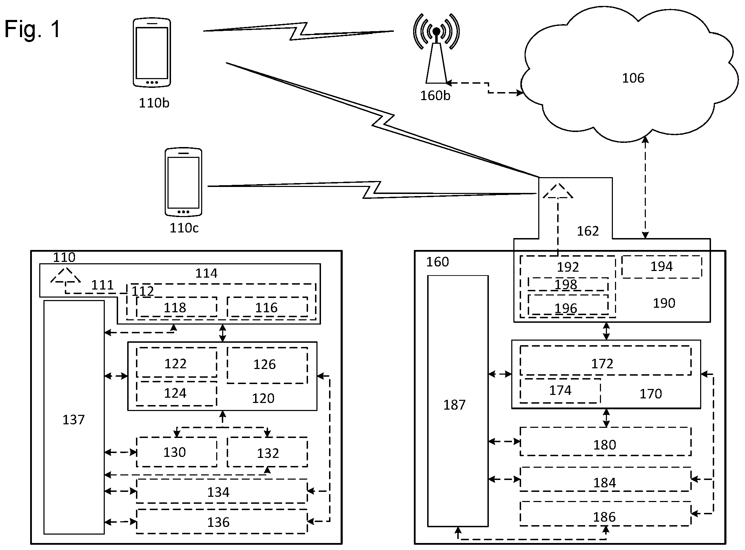

FIGURE 1 illustrates an example wireless network, according to certain embodiments. The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network.

Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations.

A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs.

As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 1, network node 160 includes processing circuitry 170, device readable medium 180, interface 190, auxiliary equipment 184, power source 186, power circuitry 187, and antenna 162. Although network node 160 illustrated in the example wireless network of FIGURE 1 may represent a device that includes the illustrated combination of hardware components, other embodiments may comprise network nodes with different combinations of components.

It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node.

In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality.

For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160 but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signaling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162.

Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 192 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160.

For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 1 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air.

In some embodiments, a WD may be configured to transmit and/or receive information without direct human interaction. For instance, a WD may be designed to transmit information to a network on a predetermined schedule, when triggered by an internal or external event, or in response to requests from the network.

Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device.

As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one example, the WD may be a UE implementing the 3GPP narrow band internet of things (NB-IoT) standard. Examples of such machines or devices are sensors, metering devices such as power meters, industrial machinery, or home or personal appliances (e.g. refrigerators, televisions, etc.) personal wearables (e.g., watches, fitness trackers, etc.).

In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 112 is connected to antenna 111 and processing circuitry 120 and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114.

Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips.

In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner.

In any of those embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected).

User interface equipment 132 may include input interfaces, devices and circuits, and output interfaces, devices and circuits. User interface equipment 132 is configured to allow input of information into WD 110 and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry.

Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

Although the subject matter described herein may be implemented in any appropriate type of system using any suitable components, the embodiments disclosed herein are described in relation to a wireless network, such as the example wireless network illustrated in FIGURE 1. For simplicity, the wireless network of FIGURE 1 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

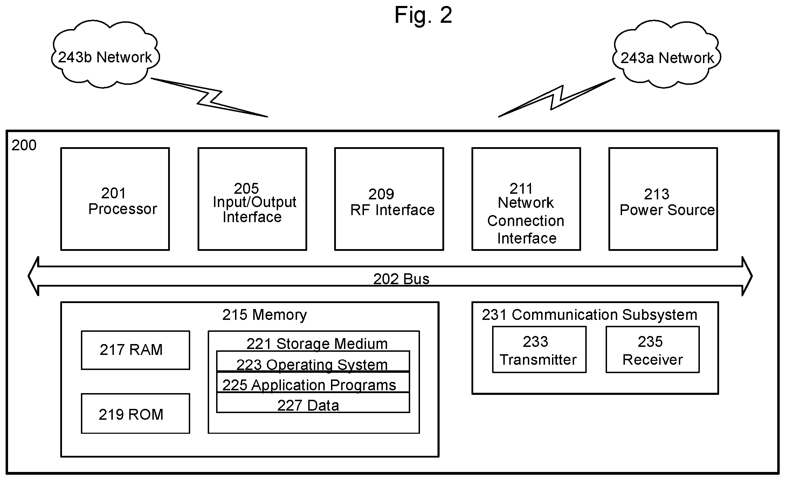

FIGURE 2 illustrates an example user equipment, according to certain embodiments. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3$^{rd}$ Generation Partnership Project (3GPP), including a NB-IoT UE, a machine type communication (MTC) UE, and/or an enhanced MTC (eMTC) UE. UE 200, as illustrated in FIGURE 2, is one example of a WD configured for communication in accordance with one or more communication standards promulgated by the 3$^{rd}$ Generation Partnership Project (3GPP), such as 3GPP's GSM, UMTS, LTE, and/or 5G standards. As mentioned previously, the term WD and UE may be used interchangeable. Accordingly, although FIGURE 2 is a UE, the components discussed herein are equally applicable to a WD, and vice-versa.

In FIGURE 2, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 213, and/or any other component, or any combination thereof. Storage medium 221 includes operating system 223, application program 225, and data 227. In other embodiments, storage medium 221 may include other similar types of information. Certain UEs may use all the components shown in FIGURE 2, or only a subset of the components. The level of integration between the components may vary from one UE to another UE. Further, certain UEs may contain multiple instances of a component, such as multiple processors, memories, transceivers, transmitters, receivers, etc.

In FIGURE 2, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205.

An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof.

UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 2, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory.

Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to offload data, or to upload data. An article of manufacture, such as one utilizing a communication system may be tangibly embodied in storage medium 221, which may comprise a device readable medium.

In FIGURE 2, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

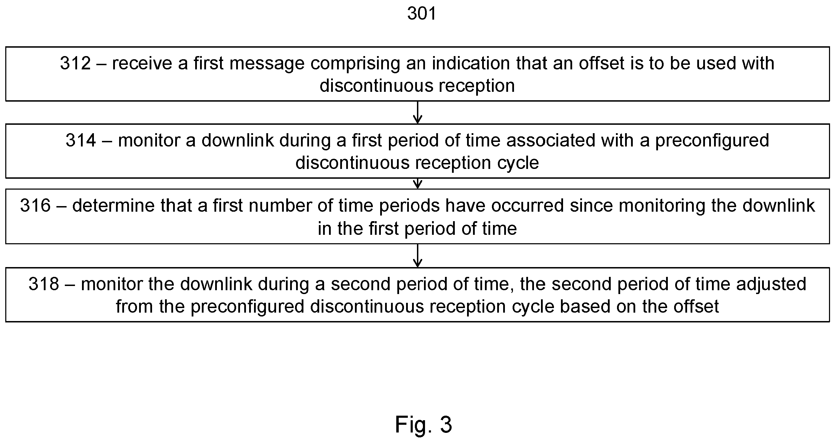

FIGURE 3 is a flowchart illustrating an example method in a wireless device, according to certain embodiments. In particular embodiments, one or more steps of FIGURE 3 may be performed by wireless device 110 described with respect to FIGURE 1.

The method may begin at step 312, where the wireless device (e.g., wireless device 110) receives a first message comprising an indication that an offset is to be used with discontinuous reception.

For example, particular embodiments configure a DRX cycle that is adjusted after a number of cycles so that the original DRX ON period is shifted by a time offset. Some embodiments include a time shift in the DRX cycle every nth DRX cycle. The DRX ON period shifts in time so that when data is generated and ready to transmit to the UE, it falls within the DRX ON period.

In particular embodiments, the first message is a RRC message and the indication is part of a DRX-Config information element. The indication may comprise an amount of time to be used for the offset and/or a frequency (i.e., periodicity) with which to apply the offset. While the offset may be described as an amount of time, the offset may be represented by a units of time (e.g., ms, number of symbols or slots, etc.).

At step 314, the wireless device monitors a downlink during a first period of time associated with a preconfigured discontinuous reception cycle. For example, the wireless device monitors for downlink signals according to the original unshifted discontinuous reception cycle.

At step 316, the wireless device determines that a first number of time periods have occurred since monitoring the downlink in the first period of time. For example, the wireless device may determine that it is time to shift the discontinuous reception cycle based on some amount of elapsed time.

At step 318, the wireless device monitors the downlink during a second period of time. The second period of time is adjusted from the preconfigured discontinuous reception cycle based on the offset. In some embodiments, the wireless device may continue to shift its discontinuous reception cycle periodically. In particular embodiments, the wireless device shifts the discontinuous reception cycle according to any of the embodiments, examples, and/or equations described herein.

In particular embodiments, the wireless device obtains additional offset information. The additional offset information may be received from the first message, from a second message, or be predetermined. The additional offset information may comprise one of an amount of time to be used for the offset and an indication of a frequency with which to apply the offset. The additional offset information may replace or update some or all of the previous offset and or frequency information.

Modifications, additions, or omissions may be made to method 301 of FIGURE 3. Additionally, one or more steps in the method of FIGURE 3 may be performed in parallel or in any suitable order.

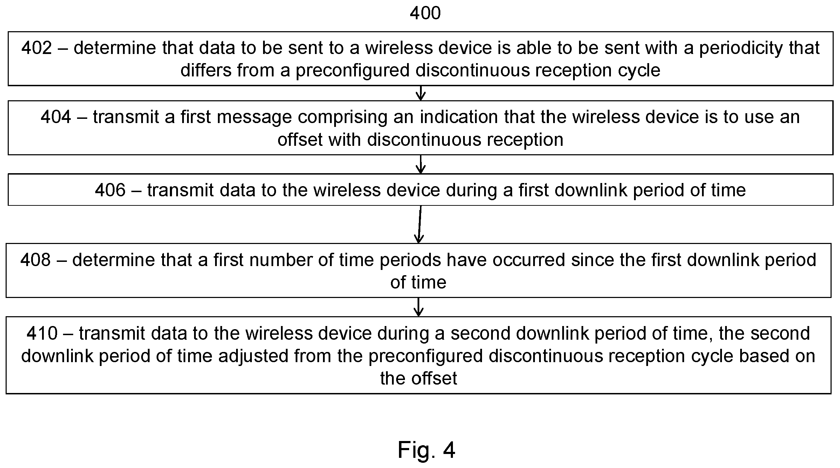

FIGURE 4 is a flowchart illustrating an example method in a network node, according to the claimed invention. In particular embodiments, one or more steps of FIGURE 4 may be performed by network node 160 described with respect to FIGURE 1.

The method begins at step 412, where the network node (e.g., network node 160) determines that data to be sent to a wireless device is able to be sent with a periodicity that differs from a preconfigured discontinuous reception cycle. For example, the network node may determine that it is transmitting video data, such as XR data, that is transmitted at a rate that is not an integer value of the discontinuous reception cycle (or for any other suitable reason).

At step 414, the network node transmits a first message comprising an indication that the wireless device is to use an offset with discontinuous reception. The indication may comprise an amount of time to be used for the offset. The indication comprises a frequency (i.e., periodicity) with which to apply the offset as described with respect to FIGURE 3.

At step 416, the network node transmits data to the wireless device during a first downlink period of time. In the first downlink period, the network node transmit data to the wireless device based on an initially configured discontinuous reception cycle.

At step 418, the network node determines that a first number of time periods have occurred since the first downlink period of time. In the claimed invention, based on an elapsed amount of time, based on the frequency, network node determines is it time to shift the discontinuous reception cycle based on the offset.

At step 420, the network node transmits data to the wireless device during a second downlink period of time. The second downlink period of time is adjusted from the preconfigured discontinuous reception cycle based on the offset.

Particular advantages are that the network node may more efficiently transmit data to the wireless device by shifting the discontinuous reception cycle to align with the available data for transmission so that the network node does not have to skip transmission windows as described above, for example, with respect to Table 2.

Modifications, additions, or omissions may be made to method 400 of FIGURE 4. Additionally, one or more steps in the method of FIGURE 4 may be performed in parallel or in any suitable order.

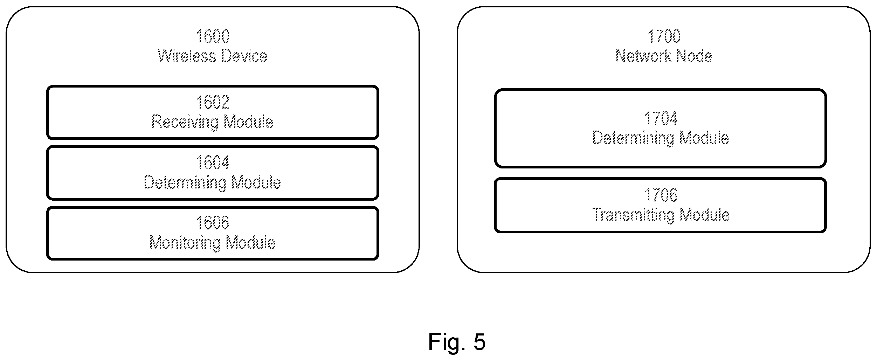

FIGURE 5 illustrates a schematic block diagram of two apparatuses in a wireless network (for example, the wireless network illustrated in FIGURE 1). The apparatuses include a wireless device and a network node (e.g., wireless device 110 and network node 160 illustrated in FIGURE 1). Apparatuses 1600 and 1700 are operable to carry out the example methods described with reference to FIGURES 3 and 4, respectively, and possibly any other processes or methods disclosed herein. It is also to be understood that the methods of FIGURES 3 and 4 are not necessarily carried out solely by apparatuses 1600 and/or 1700. At least some operations of the methods can be performed by one or more other entities.

Virtual apparatuses 1600 and 1700 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments.

In some implementations, the processing circuitry may be used to cause receiving module 1602, determining module 1604, monitoring module 1606, and any other suitable units of apparatus 1600 to perform corresponding functions according one or more embodiments of the present disclosure. Similarly, the processing circuitry described above may be used to cause determining module 1704, transmitting module 1706, and any other suitable units of apparatus 1700 to perform corresponding functions according one or more embodiments of the present disclosure.

As illustrated in FIGURE 5, apparatus 1600 includes receiving module 1602 configured to receive downlink transmissions and control information such as an offset indication according to any of the embodiments and examples described herein. Determining module 1604 is configured to determine whether to perform an discontinuous reception cycle shift according to any of the embodiments and examples described herein. Monitoring module 1606 is configured to monitor for downlink transmissions according to any of the embodiments and examples described herein.

As illustrated in FIGURE 5, apparatus 1700 includes determining module 1704 configured to determine whether to shift a discontinuous reception cycle according to any of the embodiments and examples described herein. Transmitting module 1706 is configured to transmit downlink transmissions and control information such as an offset indication, according to any of the embodiments and examples described herein.

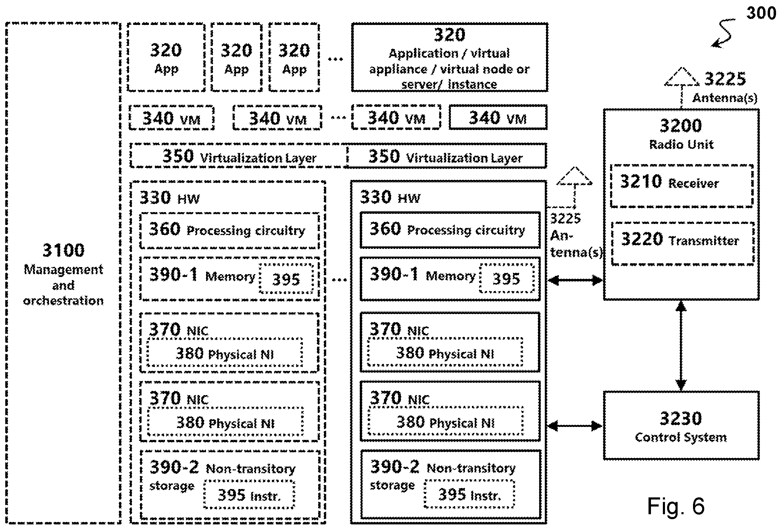

FIGURE 6 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390.

Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 6, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in Figure 18.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be effected with the use of control system 3230 which may alternatively be used for communication between the hardware nodes 330 and radio units 3200.

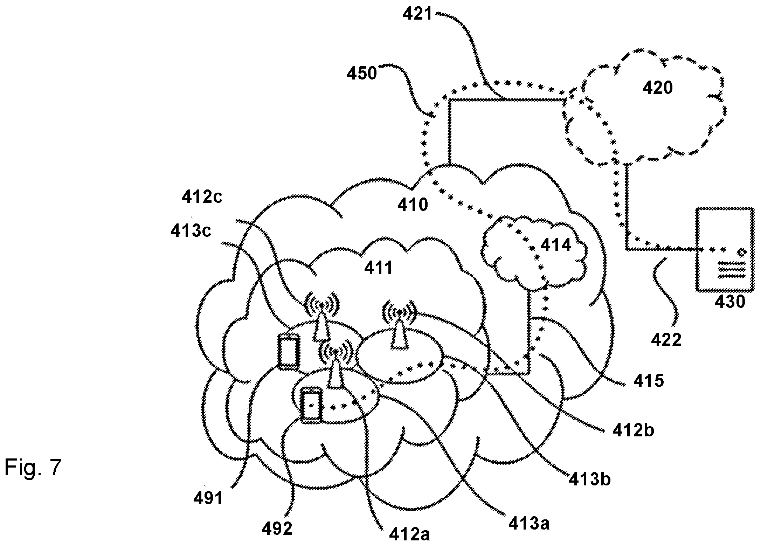

With reference to FIGURE 7, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 7 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

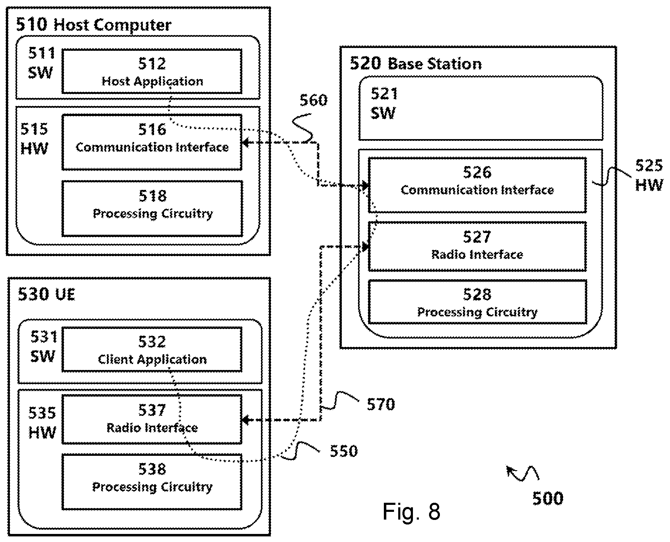

FIGURE 8 illustrates an example host computer communicating via a base station with a user equipment over a partially wireless connection, according to certain embodiments. Example implementations, in accordance with an embodiment of the UE, base station and host computer discussed in the preceding paragraphs will now be described with reference to FIGURE 8. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 8) served by base station 520. Communication interface 526 may be configured to facilitate connection 560 to host computer 510. Connection 560 may be direct, or it may pass through a core network (not shown in FIGURE 8) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 8 may be similar or identical to host computer 430, one of base stations 412a, 412b, 412c and one of UEs 491, 492 of FIGURE 6, respectively. This is to say, the inner workings of these entities may be as shown in FIGURE 8 and independently, the surrounding network topology may be that of FIGURE 6.

In FIGURE 8, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., based on load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the signaling overhead and reduce latency, which may provide faster internet access for users.

A measurement procedure may be provided for monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

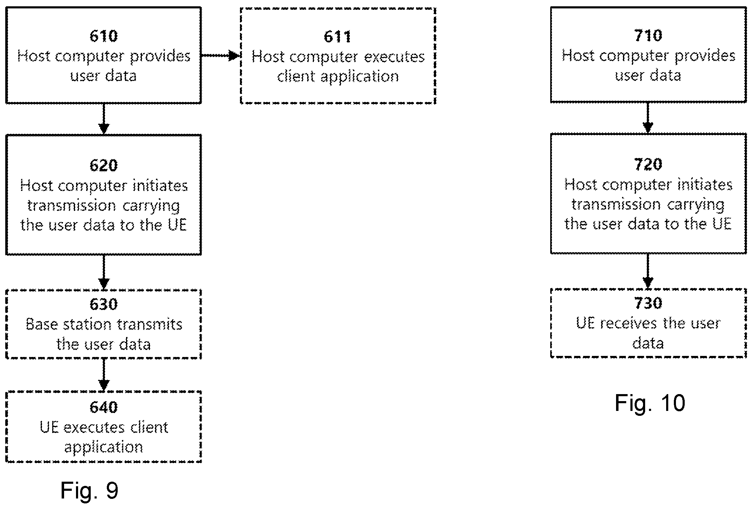

FIGURE 9 is a flowchart illustrating a method implemented in a communication system, in accordance with one embodiment. The communication system includes a host computer, a base station and a UE which may be those described with reference to FIGURES 7 and 8. For simplicity of the present disclosure, only drawing references to FIGURE 9 will be included in this section.

In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 10 is a flowchart illustrating a method implemented in a communication system, in accordance with one embodiment. The communication system includes a host computer, a base station and a UE which may be those described with reference to FIGURES 7 and 8. For simplicity of the present disclosure, only drawing references to FIGURE 10 will be included in this section.

In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

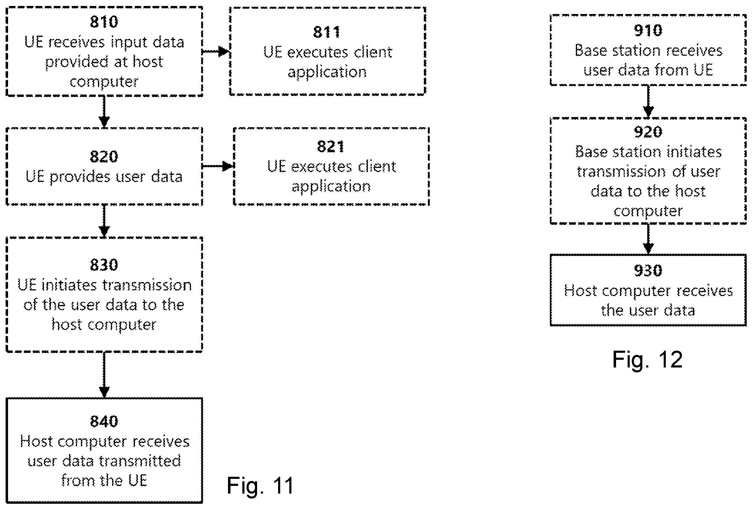

FIGURE 11 is a flowchart illustrating a method implemented in a communication system, in accordance with one embodiment. The communication system includes a host computer, a base station and a UE which may be those described with reference to FIGURES 7 and 8. For simplicity of the present disclosure, only drawing references to FIGURE 11 will be included in this section.

In step 810 (which may be optional), the UE receives input data provided by the host computer. Additionally, or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 12 is a flowchart illustrating a method implemented in a communication system, in accordance with one embodiment. The communication system includes a host computer, a base station and a UE which may be those described with reference to FIGURES 7 and 8. For simplicity of the present disclosure, only drawing references to FIGURE 12 will be included in this section.

In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

The following are examples of some of the embodiments described above. In some examples, a method performed by a wireless device for logical channel prioritization comprises receiving an allowed priority level for a logical channel, receiving an uplink grant with a priority indication, determining the uplink grant may be used for transmission of the logical channel based on the priority level of the logical channel and the priority indication of the uplink grant, and transmitting the logical channel in the uplink grant.

In one example, the priority indication in the uplink grant is represented by an absence of a priority indication. As another example, the allowed priority level for the logical channel is low priority. or the allowed priority level for the logical channel is low priority or high priority. The allowed priority level for the logical channel may be allowed on grant without indication. In another example, the priority indication in the uplink grant is low priority and the allowed priority level for the logical channel is low priority, or the priority indication in the uplink grant is high priority and the allowed priority level for the logical channel is high priority.

In one example, the method further comprises providing user data and forwarding the user data to a host computer via the transmission to the base station.

In some examples, a method performed by a base station for logical channel prioritization comprises transmitting an allowed priority level for a logical channel to a wireless device, transmitting an uplink grant with a priority indication to the wireless device, and receiving the logical channel in the uplink grant based on the priority level of the logical channel and the priority indication of the uplink grant.

In one example, the priority indication in the uplink grant is represented by an absence of a priority indication. As another example, the allowed priority level for the logical channel is low priority. or the allowed priority level for the logical channel is low priority or high priority. The allowed priority level for the logical channel may be allowed on grant without indication. In another example, the priority indication in the uplink grant is low priority and the allowed priority level for the logical channel is low priority, or the priority indication in the uplink grant is high priority and the allowed priority level for the logical channel is high priority.

In one example, the method further comprises obtaining user data and forwarding the user data to a host computer or a wireless device.

Some examples include a wireless device for logical channel prioritization. The wireless device comprises processing circuitry configured to perform any of the steps of any of the above wireless device examples and power supply circuitry configured to supply power to the wireless device.

Some examples include a base station for logical channel prioritization. The base station comprises processing circuitry configured to perform any of the steps of any of base station examples above and power supply circuitry configured to supply power to the wireless device.

Some examples include a UE for logical channel prioritization. The UE comprises: an antenna configured to send and receive wireless signals; radio front-end circuitry connected to the antenna and to processing circuitry, and configured to condition signals communicated between the antenna and the processing circuitry. The processing circuitry is configured to perform any of the steps of any of the wireless device examples described above. The UE further comprises: an input interface connected to the processing circuitry and configured to allow input of information into the UE to be processed by the processing circuitry; an output interface connected to the processing circuitry and configured to output information from the UE that has been processed by the processing circuitry; and a battery connected to the processing circuitry and configured to supply power to the UE.

Some examples include a communication system including a host computer comprising processing circuitry configured to provide user data and a communication interface configured to forward the user data to a cellular network for transmission to a UE. The cellular network comprises a base station having a radio interface and processing circuitry. The base station's processing circuitry is configured to perform any of the steps of any of the base station examples described above. The communication system may further include a base station. The communication system may further include a UE configured to communicate with the base station. The processing circuitry of the host computer may be configured to execute a host application, thereby providing the user data. The UE comprises processing circuitry configured to execute a client application associated with the host application.

Some examples include a method implemented in a communication system including a host computer, a base station and a UE. The method comprises: at the host computer, providing user data; and at the host computer, initiating a transmission carrying the user data to the UE via a cellular network comprising the base station, wherein the base station performs any of the steps of any of the base station examples described above. The base station may transmit the user data. The user data may be provided at the host computer by executing a host application, and the UE may execute a client application associated with the host application.

Some examples include a UE configured to communicate with a base station. The UE comprises a radio interface and processing circuitry configured to performs any of the previous examples.

Some examples include a communication system including a host computer comprising processing circuitry configured to provide user data and a communication interface configured to forward user data to a cellular network for transmission to a UE. The UE comprises a radio interface and processing circuitry. The UE's components are configured to perform any of the steps of any of the wireless device examples described above. The cellular network may further include a base station configured to communicate with the UE. The processing circuitry of the host computer may be configured to execute a host application, thereby providing the user data. The UE's processing circuitry may be configured to execute a client application associated with the host application.

Some examples include a method implemented in a communication system including a host computer, a base station and a UE. The method comprises: at the host computer, providing user data; and at the host computer, initiating a transmission carrying the user data to the UE via a cellular network comprising the base station, wherein the UE performs any of the steps of any of the wireless device examples described above. The method may further comprise the UE receiving the user data from the base station.

Some examples include a communication system including a host computer comprising a communication interface configured to receive user data originating from a transmission from a UE to a base station. The UE comprises a radio interface and processing circuitry. The UE's processing circuitry is configured to perform any of the steps of any of the wireless device examples described above. The communication system may further include the UE. The communication system may further include the base station. The base station comprises a radio interface configured to communicate with the UE and a communication interface configured to forward to the host computer the user data carried by a transmission from the UE to the base station. The processing circuitry of the host computer may be configured to execute a host application, and the UE's processing circuitry may be configured to execute a client application associated with the host application, thereby providing the user data. The processing circuitry of the host computer may be configured to execute a host application, thereby providing request data, and the UE's processing circuitry may be configured to execute a client application associated with the host application, thereby providing the user data in response to the request data.

Some examples include a method implemented in a communication system including a host computer, a base station and a UE. The method comprises: at the host computer, receiving user data transmitted to the base station from the UE, wherein the UE performs any of the steps of any of the wireless device examples described above. The UE may provide the user data to the base station. The UE may execute a client application, thereby providing the user data to be transmitted. The host computer may execute a host application associated with the client application. The UE may execute a client application, The UE may receive input data to the client application. The input data being provided at the host computer by executing a host application associated with the client application. The user data to be transmitted may be provided by the client application in response to the input data.

Some examples include a communication system including a host computer comprising a communication interface configured to receive user data originating from a transmission from a UE to a base station. The base station comprises a radio interface and processing circuitry. The base station's processing circuitry is configured to perform any of the steps of any of the base station examples described above. The communication system may include the base station. The communication system may include the UE. The UE may be configured to communicate with the base station. The processing circuitry of the host computer may be configured to execute a host application. The UE may be configured to execute a client application associated with the host application, thereby providing the user data to be received by the host computer.

Some examples include a method implemented in a communication system including a host computer, a base station and a UE. The method comprises: at the host computer, receiving, from the base station, user data originating from a transmission which the base station has received from the UE, wherein the UE performs any of the steps of any of the wireless device examples described above. The base station may receive the user data from the UE. The base station may initiate a transmission of the received user data to the host computer.

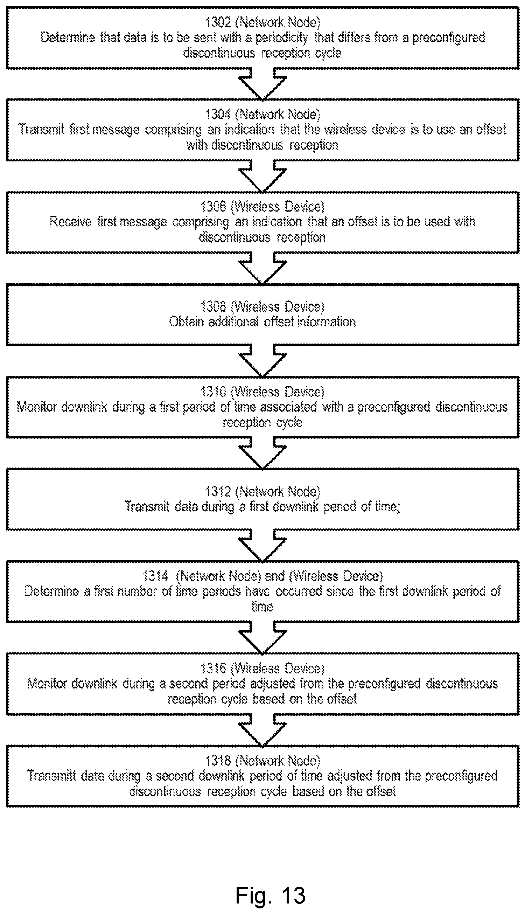

FIGURE 13 is a flowchart illustrating a method in accordance with some embodiments. For convenience, the method includes the steps of a method performed by a network node and steps of a method performed by a wireless device, in accordance with some embodiments. The illustrated method begins at step 1302 with the network node determining that the data it is to send to the wireless device is to be sent with a periodicity that differs from a preconfigured discontinuous reception cycle. For example, the data may be sent with a periodicity involving a fraction or decimal (e.g., every 33.3333 ms) while the preconfigured DRX may start every 32 ms. The data may be user data that the network node is to forward on to a wireless data. For example, it may be virtual reality, augmented reality or other such data.

At step 1304, upon determining there is an incongruity in the periodicity of the DRX cycles and the data to be sent, the network node may transmit a message comprising an indication that the wireless device is to use an offset with the DRX. The offset may correct the DRX cycles in which the data to be sent to the wireless device would otherwise have been sent during a period in which the wireless device is not normally receiving data.

At step 1306, the wireless device receives the first message from network node comprising an indication that an offset is to be used with discontinuous reception. In some embodiments, the first message is an RRC message. In some embodiments, the indication may be part of a DRX-Config information element. In some embodiments, the indication may provide an amount of time that is to be used for the offset. In some embodiments, the indication may provide a frequency with which to apply the offset. In some embodiments, both the amount of time of the offset and the frequency with which to apply it may be received in the first message.

At step 1308, the wireless device obtains additional offset information. The additional offset information may be obtained from the first message, from a second message from the network node, or it may be predetermined or preconfigured by the wireless device and/or the standard being used to receive the data. The types of additional offset information may be similar to the offset information. That is, it may be the amount of time to be used for the offset or the frequency with which to apply the offset. For example, first message may specify the amount of time of the offset and the wireless device may be preconfigured with the frequency with which to apply the offset. Similarly, the first message may indicate the frequency with which to apply an offset, and a second message may indicate the amount of time.

At step 1310, the wireless device monitors the downlink during a first period of time associated with a preconfigured DRX cycle. Although this is referred to as a first period of time, it is not necessarily the very first time the wireless device is monitoring the downlink.

At step 1312, the network node transmits data during the first period of time. The transmission may start anywhere during the respective DRX cycle. That is, the network node does not have to start transmitting at the start of the DRX cycle, even if the wireless device begins monitoring the downlink at the start of the DRX cycle.

At step 1314, the network node and the wireless device determine a first number of time periods have occurred since the first downlink period of time. Although the method shows this as one step, each device may make the determination independent of the other, and at different points in time.

At step 1316, the wireless device monitors the downlink during a second period of time that has been adjusted from preconfigured DRX based on the offset. The second period of time does not necessarily occur in the DRX cycle immediately after the first period of time. Rather, the number of cycles between the first and second periods of time may depend on the variance in the periodicity between the data that is to be sent and the preconfigured DRX cycle.

At step 1318, the network node transmits data during the second period of time. As before, the network node may transmit the data at any point within the second period of time.

The method lists separate steps of determining a number of time periods has occurred since the first downlink period of time (1314) and then monitoring the downlink (1316) or transmitting data (1318) based on the offset. These may be done using an equation, such as:

$$\left[(SFN x 10) + (subframe\ nr) + (n\ x\ traffic\_time\_offset)\ modulo\ DRX_{cycle}\right]$$

$$= \left(drx_{start_{offset}}\right) + (n\ x\ traffic\_time\_offset)modulo\ DRX_{cycle}$$

$$DRX_{cycle\ number} = \frac{SFN x 10 + subframe\ nr}{DRX\_cycle}$$

*n = n + 1 when DRX$_{cycle\ number}$mosulo traffic_drx_offset* = 0.

Modifications, additions, or omissions may be made to the systems and apparatuses disclosed herein without departing from the scope of the invention. The scope of the invention is defined by the appended claims. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods disclosed herein without departing from the scope of the invention. The scope of the invention is defined by the appended claims. The methods may include more, fewer, or other steps. Additionally, steps may be performed in any suitable order.

The foregoing description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments, whether or not explicitly described.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the claims below.

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| 1x RTT | CDMA2000 1x Radio Transmission Technology |
| 3GPP | 3rd Generation Partnership Project |
| 5G | 5th Generation |
| ACK/NACK | Acknowledgment/Non-acknowledgment |
| ARQ | Automatic Repeat Request |
| CA | Carrier Aggregation |
| CC | Carrier Component |
| CDMA | Code Division Multiplexing Access |
| CP | Cyclic Prefix |
| CQI | Channel Quality information |
| C-RNTI | Cell RNTI |
| CSI | Channel State Information |
| DCI | Downlink Control Information |
| DFTS-OFDM | Discrete Fourier Transform Spread OFDM |
| DL | Downlink |
| DRX | Discontinuous Reception |
| DTX | Discontinuous Transmission |
| ECGI | Evolved CGI |
| eNB | E-UTRAN NodeB |
| ePDCCH | enhanced Physical Downlink Control Channel |
| E-SMLC | evolved Serving Mobile Location Center |
| E-UTRA | Evolved UTRA |
| E-UTRAN | Evolved UTRAN |
| FDD | Frequency Division Duplex |
| GERAN | GSM EDGE Radio Access Network |
| gNB | Base station in NR |

| HARQ | Hybrid Automatic Repeat Request |
| HSPA | High Speed Packet Access |
| HRPD | High Rate Packet Data |
| LTE | Long-Term Evolution |
| MAC | Medium Access Control |
| MCS | Modulation and Coding Scheme |
| MME | Mobility Management Entity |
| MSC | Mobile Switching Center |
| NPDCCH | Narrowband Physical Downlink Control Channel |
| NR | New Radio |
| OFDM | Orthogonal Frequency Division Multiplexing |
| OFDMA | Orthogonal Frequency Division Multiple Access |
| OTDOA | Observed Time Difference of Arrival |
| O&M | Operation and Maintenance |
| PBCH | Physical Broadcast Channel |
| PCell | Primary Cell |
| PDCCH | Physical Downlink Control Channel |
| PDSCH | Physical Downlink Shared Channel |
| PLMN | Public Land Mobile Network |
| PSS | Primary Synchronization Signal |
| PUCCH | Physical Uplink Control Channel |
| PUSCH | Physical Uplink Shared Channel |
| RACH | Random Access Channel |
| QAM | Quadrature Amplitude Modulation |
| RAN | Radio Access Network |
| RAT | Radio Access Technology |
| RLM | Radio Link Management |
| RNC | Radio Network Controller |
| RNTI | Radio Network Temporary Identifier |

| | |
|---|---|
| RRC | Radio Resource Control |
| RRM | Radio Resource Management |
| RS | Reference Signal |
| RSCP | Received Signal Code Power |
| RSRP | Reference Symbol Received Power OR Reference Signal Received Power |
| RSRQ | Reference Signal Received Quality OR Reference Symbol Received Quality |
| RSSI | Received Signal Strength Indicator |
| RSTD | Reference Signal Time Difference |
| SCH | Synchronization Channel |
| SCell | Secondary Cell |
| SDU | Service Data Unit |
| SFN | System Frame Number |
| SI | System Information |
| SIB | System Information Block |
| SNR | Signal to Noise Ratio |
| SPS | Semi-Persistent Scheduling |
| SS | Synchronization Signal |
| SSS | Secondary Synchronization Signal |
| TDD | Time Division Duplex |
| TDOA | Time Difference of Arrival |
| TO | Transmission Occasion |
| TOA | Time of Arrival |
| TSS | Tertiary Synchronization Signal |
| TTI | Transmission Time Interval |
| UE | User Equipment |
| UL | Uplink |
| URLLC | Ultra-Reliable and Low-Latency Communications |
| UMTS | Universal Mobile Telecommunication System |
| USIM | Universal Subscriber Identity Module |

| UTDOA | Uplink Time Difference of Arrival |
| UTRA | Universal Terrestrial Radio Access |
| UTRAN | Universal Terrestrial Radio Access Network |
| WCDMA | Wide CDMA |
| WLAN | Wide Local Area Network |

**Claims**

1. A method performed by a wireless device (110) for discontinuous reception, DRX, wherein data is transmitted at a rate that is not an integer value of a preconfigured discontinuous reception cycle, the method comprising:

   receiving (312) a first message comprising an indication that an offset is to be used with discontinuous reception wherein the indication comprises a frequency with which to apply the offset;
   monitoring (314) a downlink of the data during a first period of time associated with the preconfigured discontinuous reception cycle;
   determining (316) that a first number of time periods, based on the frequency, have occurred since monitoring the downlink in the first period of time; and
   monitoring (318) the downlink during a second period of time, the second period of time adjusted from the preconfigured discontinuous reception cycle based on the offset.

2. The method of claim 1, wherein the first message is a radio resource control, RRC, message and the indication is part of a DRX-Config information element.

3. The method of any one of claims 1-2, wherein the indication comprises an amount of time to be used for the offset.

4. The method of any one of claims 1-3, wherein the wireless device (110) obtains an additional offset information.

5. The method of claim 4, wherein the additional offset information is received from the first message, from a second message, or is predetermined.

6. The method of any one of claims 4-5, wherein the additional offset information comprises an amount of time to be used for the offset

7. A wireless device (110) comprising processing circuitry (120) wherein data is transmitted at a rate that is not an integer value of a preconfigured discontinuous reception cycle, the wireless device (110) operable to:

   receive a first message comprising an indication that an offset is to be used with discontinuous reception wherein the indication comprises a frequency with which to apply the offset;
   monitor a downlink during a first period of time associated with the preconfigured discontinuous reception cycle;
   determine that a first number of time periods, based on the frequency, have occurred since monitoring the downlink in the first period of time; and
   monitor the downlink during a second period of time, the second period of time adjusted from the preconfigured discontinuous reception cycle based on the offset.

8. A method performed by a network node (160) for discontinuous reception, DRX, wherein data is transmitted at a rate that is not an integer value of a preconfigured discontinuous reception cycle, the method comprising:

   determining (402) that data to be sent to a wireless device (110) is able to be sent with a periodicity that differs from the preconfigured discontinuous reception cycle;
   transmitting (404) a first message comprising an indication that the wireless device (110) is to use an offset with discontinuous reception wherein the indication comprises a frequency with which to apply the offset;
   transmitting (406) data to the wireless device (110) during a first downlink period of time;
   determining (408) that a first number of time periods , based on the frequency, have occurred since the first downlink period of time; and

transmitting (409) data to the wireless device (110) during a second downlink period of time, the second downlink period of time adjusted from the preconfigured discontinuous reception cycle based on the offset.

9. A network node (160) comprising processing circuitry (170), wherein data is transmitted at a rate that is not an integer value of a preconfigured preconfigured discontinuous reception cycle, the network node (160) operable to:

determine that data to be sent to a wireless device is to be sent with a periodicity that differs from the preconfigured discontinuous reception cycle;
transmit a first message comprising an indication that the wireless device is to use an offset with discontinuous reception wherein the indication comprises a frequency with which to apply the offset;
transmit data to the wireless device during a first downlink period of time;
determine that a first number of time periods, based on the frequency, have occurred since the first downlink period of time; and
transmit data to the wireless device during a second downlink period of time, the second downlink period of time adjusted from the preconfigured discontinuous reception cycle based on the offset.

## Patentansprüche

1. Verfahren für diskontinuierlichen Empfang, DRX, das von einer drahtlosen Vorrichtung (110) durchgeführt wird, wobei Daten mit einer Rate übertragen werden, die nicht ein ganzzahliger Wert eines vorkonfigurierten Zyklus diskontinuierlichen Empfangs ist, wobei das Verfahren Folgendes umfasst:

Empfangen (312) einer ersten Nachricht, die eine Angabe umfasst, dass ein Offset bei diskontinuierlichem Empfang verwendet werden soll, wobei die Angabe eine Frequenz umfasst, mit der der Offset angewendet werden soll;
Überwachen (314) eines Downlinks der Daten während eines ersten Zeitraums, der mit dem vorkonfigurierten Zyklus diskontinuierlichen Empfangs assoziiert ist;
Bestimmen (316) basierend auf der Frequenz, dass eine erste Anzahl von Zeiträumen seit dem Überwachen des Downlinks im ersten Zeitraum vergangen ist; und
Überwachen (318) des Downlinks während eines zweiten Zeitraums, wobei der zweite Zeitraum vom Zyklus diskontinuierlichen Empfangs basierend auf dem Offset angepasst wird.

2. Verfahren nach Anspruch 1, wobei die erste Nachricht eine Funkressourcensteuerungsnachricht, RRC-Nachricht, ist und die Angabe Teil eines DRX-Config-Informationselements ist.

3. Verfahren nach einem der Ansprüche 1-2, wobei die Angabe eine Zeitdauer umfasst, die für den Offset verwendet werden soll.

4. Verfahren nach einem der Ansprüche 1-3, wobei die drahtlose Vorrichtung (110) eine zusätzliche Offset-Information erhält.

5. Verfahren nach Anspruch 4, wobei die zusätzliche Offset-Information aus der ersten Nachricht oder aus der zweiten Nachricht erhalten wird oder vorgegeben ist.

6. Verfahren nach einem der Ansprüche 4-5, wobei die zusätzliche Offset-Information eine Zeitdauer umfasst, die für den Offset verwendet werden soll.

7. Drahtlose Vorrichtung (110), umfassend Verarbeitungsschaltungsanordnung (120), wobei Daten mit einer Rate übertragen werden, die nicht ein ganzzahliger Wert eines vorkonfigurierten Zyklus diskontinuierlichen Empfangs ist, wobei die drahtlose Vorrichtung (110) zu Folgendem ausgelegt ist:

Empfangen einer ersten Nachricht, die eine Angabe umfasst, dass ein Offset bei diskontinuierlichem Empfang verwendet werden soll, wobei die Angabe eine Frequenz umfasst, mit der der Offset angewendet werden soll;
Überwachen eines Downlinks während eines ersten Zeitraums, der mit dem vorkonfigurierten Zyklus diskontinuierlichen Empfangs assoziiert ist;
Bestimmen basierend auf der Frequenz, dass eine erste Anzahl von Zeiträumen seit dem Überwachen des Downlinks im ersten Zeitraum vergangen ist; und

Überwachen des Downlinks während eines zweiten Zeitraums, wobei der zweite Zeitraum vom Zyklus diskontinuierlichen Empfangs basierend auf dem Offset angepasst wird.

8. Verfahren für diskontinuierlichen Empfang, DRX, das von einem Netzwerkknoten (160) durchgeführt wird, wobei Daten mit einer Rate übertragen werden, die nicht ein ganzzahliger Wert eines vorkonfigurierten Zyklus diskontinuierlichen Empfangs ist, wobei das Verfahren Folgendes umfasst:

Bestimmen (402), dass Daten, die an eine drahtlose Vorrichtung (110) gesendet werden sollen, mit einer Periodizität gesendet werden können, die sich von dem vorkonfigurierten Zyklus diskontinuierlichen Empfangs unterscheidet;
Übertragen (404) einer ersten Nachricht, die eine Angabe umfasst, dass die drahtlose Vorrichtung (110) bei diskontinuierlichem Empfang einen Offset verwenden soll, wobei die Angabe eine Frequenz umfasst, mit der der Offset angewendet werden soll;
Übertragen (406) von Daten an die drahtlose Vorrichtung (110) während eines ersten Downlink-Zeitraums;
Bestimmen (408) basierend auf der Frequenz, dass eine erste Anzahl von Zeiträumen seit dem ersten Downlink-Zeitraum vergangen ist; und
Übertragen (409) von Daten an die drahtlose Vorrichtung (110) während eines zweiten Downlink-Zeitraums, wobei der zweite Downlink-Zeitraum vom Zyklus diskontinuierlichen Empfangs basierend auf dem Offset angepasst wird.

9. Netzwerkknoten (160), umfassend Verarbeitungsschaltungsanordnung (170), wobei Daten mit einer Rate übertragen werden, die nicht ein ganzzahliger Wert eines vorkonfigurierten Zyklus diskontinuierlichen Empfangs ist, wobei der Netzwerkknoten (160) zu Folgendem ausgelegt ist:

Bestimmen, dass Daten, die an eine drahtlose Vorrichtung gesendet werden sollen, mit einer Periodizität gesendet werden sollen, die sich von dem vorkonfigurierten Zyklus diskontinuierlichen Empfangs unterscheidet;
Übertragen einer ersten Nachricht, die eine Angabe umfasst, dass die drahtlose Vorrichtung bei diskontinuierlichem Empfang einen Offset verwenden soll, wobei die Angabe eine Frequenz umfasst, mit der der Offset angewendet werden soll;
Übertragen von Daten an die drahtlose Vorrichtung während eines ersten Downlink-Zeitraums;
Bestimmen basierend auf der Frequenz, dass eine erste Anzahl von Zeiträumen seit dem ersten Downlink-Zeitraum vergangen ist; und
Übertragen von Daten an die drahtlose Vorrichtung während eines zweiten Downlink-Zeitraums, wobei der zweite Downlink-Zeitraum vom Zyklus diskontinuierlichen Empfangs basierend auf dem Offset angepasst wird.

**Revendications**

1. Procédé réalisé par un dispositif sans fil (110) pour une réception discontinue, DRX, dans lequel des données sont transmises à un débit qui n'est pas une valeur entière d'un cycle de réception discontinue préconfiguré, le procédé comprenant :

la réception (312) d'un premier message comprenant une indication qu'un décalage doit être utilisé avec une réception discontinue, dans lequel l'indication comprend une fréquence à laquelle appliquer le décalage ;
la surveillance (314) d'une liaison descendante des données au cours d'une première période de temps associée au cycle de réception discontinue préconfiguré ;
la détermination (316) qu'un premier nombre de périodes de temps, sur la base de la fréquence, sont survenues depuis la surveillance de la liaison descendante dans la première période de temps ; et
la surveillance (318) de la liaison descendante au cours d'une deuxième période de temps, la deuxième période de temps étant ajustée à partir du cycle de réception discontinue préconfiguré sur la base du décalage.

2. Procédé selon la revendication 1, dans lequel le premier message est un message de commande de ressources radio, RRC, et l'indication fait partie d'un élément d'information DRX-Config.

3. Procédé selon l'une quelconque des revendications 1 et 2, dans lequel l'indication comprend une quantité de temps à utiliser pour le décalage.

4. Procédé selon l'une quelconque des revendications 1 à 3, dans lequel le dispositif sans fil (110) obtient une information de décalage supplémentaire.

5. Procédé selon la revendication 4, dans lequel l'information de décalage supplémentaire est reçue depuis le premier message, depuis un deuxième message ou est prédéterminée.

6. Procédé selon l'une quelconque des revendications 4 et 5, dans lequel l'information de décalage supplémentaire comprend une quantité de temps à utiliser pour le décalage.

7. Dispositif sans fil (110) comprenant une circuiterie de traitement (120), dans lequel des données sont transmises à un débit qui n'est pas une valeur entière d'un cycle de réception discontinue préconfiguré, le dispositif sans fil (110) étant exploitable pour :

   recevoir un premier message comprenant une indication qu'un décalage doit être utilisé avec une réception discontinue, dans lequel l'indication comprend une fréquence à laquelle appliquer le décalage ;
   surveiller une liaison descendante au cours d'une première période de temps associée au cycle de réception discontinue préconfiguré ;
   déterminer qu'un premier nombre de périodes de temps, sur la base de la fréquence, sont survenues depuis la surveillance de la liaison descendante dans la première période de temps ; et
   surveiller la liaison descendante au cours d'une deuxième période de temps, la deuxième période de temps étant ajustée à partir du cycle de réception discontinue préconfiguré sur la base du décalage.

8. Procédé réalisé par un nœud de réseau (160) pour une réception discontinue, DRX, dans lequel des données sont transmises à un débit qui n'est pas une valeur entière d'un cycle de réception discontinue préconfiguré, le procédé comprenant :

   la détermination (402) que des données à envoyer à un dispositif sans fil (110) sont aptes à être envoyées avec une périodicité qui diffère du cycle de réception discontinue préconfiguré ;
   la transmission (404) d'un premier message comprenant une indication que le dispositif sans fil (110) doit utiliser un décalage avec une réception discontinue, dans lequel l'indication comprend une fréquence à laquelle appliquer le décalage ;
   la transmission (406) de données au dispositif sans fil (110) au cours d'une première période de temps de liaison descendante ;
   la détermination (408) qu'un premier nombre de périodes de temps, sur la base de la fréquence, sont survenues depuis la première période de temps de liaison descendante ; et
   la transmission (409) de données au dispositif sans fil (110) au cours d'une deuxième période de temps de liaison descendante, la deuxième période de temps de liaison descendante étant ajustée à partir du cycle de réception discontinue préconfiguré sur la base du décalage.

9. Nœud de réseau (160) comprenant une circuiterie de traitement (170), dans lequel des données sont transmises à un débit qui n'est pas une valeur entière d'un cycle de réception discontinue préconfiguré, le nœud de réseau (160) étant exploitable pour :

   déterminer que des données à envoyer à un dispositif sans fil doivent être envoyées avec une périodicité qui diffère du cycle de réception discontinue préconfiguré ;
   transmettre un premier message comprenant une indication que le dispositif sans fil doit utiliser un décalage avec une réception discontinue, dans lequel l'indication comprend une fréquence à laquelle appliquer le décalage ;
   transmettre des données au dispositif sans fil au cours d'une première période de temps de liaison descendante ;
   déterminer qu'un premier nombre de périodes de temps, sur la base de la fréquence, sont survenues depuis la première période de temps de liaison descendante ; et
   transmettre des données au dispositif sans fil au cours d'une deuxième période de temps de liaison descendante, la deuxième période de temps de liaison descendante étant ajustée à partir du cycle de réception discontinue préconfiguré sur la base du décalage.

Fig. 1

# Fig. 2

243b Network

243a Network

200

| 201 Processor | 205 Input/Output Interface | 209 RF Interface | 211 Network Connection Interface | 213 Power Source |

202 Bus

## 215 Memory

217 RAM

### 221 Storage Medium
223 Operating System
225 Application Programs
227 Data

219 ROM

## 231 Communication Subsystem

| 233 Transmitter | 235 Receiver |

EP 4 186 327 B1

301

312 – receive a first message comprising an indication that an offset is to be used with discontinuous reception

314 – monitor a downlink during a first period of time associated with a preconfigured discontinuous reception cycle

316 – determine that a first number of time periods have occurred since monitoring the downlink in the first period of time

318 – monitor the downlink during a second period of time, the second period of time adjusted from the preconfigured discontinuous reception cycle based on the offset

Fig. 3

400

| 402 – determine that data to be sent to a wireless device is able to be sent with a periodicity that differs from a preconfigured discontinuous reception cycle |
|---|

↓

| 404 – transmit a first message comprising an indication that the wireless device is to use an offset with discontinuous reception |
|---|

↓

| 406 – transmit data to the wireless device during a first downlink period of time |
|---|

↓

| 408 – determine that a first number of time periods have occurred since the first downlink period of time |
|---|

↓

| 410 – transmit data to the wireless device during a second downlink period of time, the second downlink period of time adjusted from the preconfigured discontinuous reception cycle based on the offset |
|---|

Fig. 4

## 1600
### Wireless Device

#### 1602
Receiving Module

#### 1604
Determining Module

#### 1606
Monitoring Module

## 1700
### Network Node

#### 1704
Determining Module

#### 1706
Transmitting Module

Fig. 5

EP 4 186 327 B1

**300**

**320**
App

**320**
App

**320**
App

...

**320**
Application / virtual appliance / virtual node or server/ instance

**3225**
Antenna(s)

**340** VM

**340** VM

**340** VM

**340** VM

**3200**
Radio Unit

**3210** Receiver

**3220** Transmitter

**350** Virtualization Layer

**350** Virtualization Layer

**330** HW

**360** Processing circuitry

**390-1** Memory **395**

**370** NIC
**380** Physical NI

**370** NIC
**380** Physical NI

**390-2** Non-transitory storage **395** Instr.

**330** HW

**360** Processing circuitry

**390-1** Memory **395**

**370** NIC
**380** Physical NI

**370** NIC
**380** Physical NI

**390-2** Non-transitory storage **395** Instr.

**3225** An-tenna(s)

**3100**
Management and orchestration

**3230**
Control System

Fig. 6

Fig. 7

Fig. 8

**710**
Host computer provides user data

**720**
Host computer initiates transmission carrying the user data to the UE

**730**
UE receives the user data

Fig. 10

**611**
Host computer executes client application

**610**
Host computer provides user data

**620**
Host computer initiates transmission carrying the user data to the UE

**630**
Base station transmits the user data

**640**
UE executes client application

Fig. 9

```
┌─────────────────────┐        ┌─────────────────────┐
│        810          │        │        811          │
│ UE receives input   │───────▶│ UE executes client  │
│  data provided at   │        │    application      │
│   host computer     │        │                     │
└─────────────────────┘        └─────────────────────┘
           │
           ▼
┌─────────────────────┐        ┌─────────────────────┐
│        820          │        │        821          │
│ UE provides user    │───────▶│ UE executes client  │
│       data          │        │    application      │
└─────────────────────┘        └─────────────────────┘
           │
           ▼
┌─────────────────────┐
│        830          │
│ UE initiates        │
│ transmission of the │
│ user data to the    │
│   host computer     │
└─────────────────────┘
           │
           ▼
┌─────────────────────┐
│        840          │
│ Host computer       │
│ receives user data  │
│ transmitted from    │
│    the UE           │          Fig. 11
└─────────────────────┘
```

```
┌─────────────────────┐
│        910          │
│ Base station        │
│ receives user data  │
│    from UE          │
└─────────────────────┘
           │
           ▼
┌─────────────────────┐
│        920          │
│ Base station        │
│ initiates           │
│ transmission of     │
│ user data to the    │
│  host computer      │
└─────────────────────┘
           │
           ▼
┌─────────────────────┐
│        930          │
│ Host computer       │
│ receives the user   │
│      data           │
└─────────────────────┘

         Fig. 12
```

```
┌─────────────────────────────────────────────────────────────────┐
│                    1302 (Network Node)                            │
│  Determine that data is to be sent with a periodicity that differs│
│     from a preconfigured discontinuous reception cycle            │
└─────────────────────────────────────────────────────────────────┘
                              ↓
┌─────────────────────────────────────────────────────────────────┐
│                    1304 (Network Node)                            │
│  Transmit first message comprising an indication that the wireless│
│       device is to use an offset with discontinuous reception     │
└─────────────────────────────────────────────────────────────────┘
                              ↓
┌─────────────────────────────────────────────────────────────────┐
│                    1306 (Wireless Device)                         │
│  Receive first message comprising an indication that an offset is │
│            to be used with discontinuous reception                │
└─────────────────────────────────────────────────────────────────┘
                              ↓
┌─────────────────────────────────────────────────────────────────┐
│                    1308 (Wireless Device)                         │
│              Obtain additional offset information                  │
└─────────────────────────────────────────────────────────────────┘
                              ↓
┌─────────────────────────────────────────────────────────────────┐
│                    1310 (Wireless Device)                         │
│  Monitor downlink during a first period of time associated with a │
│       preconfigured discontinuous reception cycle                 │
└─────────────────────────────────────────────────────────────────┘
                              ↓
┌─────────────────────────────────────────────────────────────────┐
│                    1312 (Network Node)                            │
│      Transmit data during a first downlink period of time;        │
└─────────────────────────────────────────────────────────────────┘
                              ↓
┌─────────────────────────────────────────────────────────────────┐
│           1314 (Network Node) and (Wireless Device)               │
│  Determine a first number of time periods have occurred since the │
│           first downlink period of time                           │
└─────────────────────────────────────────────────────────────────┘
                              ↓
┌─────────────────────────────────────────────────────────────────┐
│                    1316 (Wireless Device)                         │
│  Monitor downlink during a second period adjusted from the        │
│   preconfigured discontinuous reception cycle based on the offset  │
└─────────────────────────────────────────────────────────────────┘
                              ↓
┌─────────────────────────────────────────────────────────────────┐
│                    1318 (Network Node)                            │
│  Transmitt data during a second downlink period of time adjusted  │
│  from the preconfigured discontinuous reception cycle based on    │
│                      the offset                                   │
└─────────────────────────────────────────────────────────────────┘
```

Fig. 13

## REFERENCES CITED IN THE DESCRIPTION

**Patent documents cited in the description**

- US 10342063 B2
- US 2018168485 A1

- EP 3500025 A1